# EUROPÄISCHE PATENTSCHRIFT

(11) **EP 2 128 941 B1**
(45) Veröffentlichungstag und Bekanntmachung des Hinweises auf die Patenterteilung: **01.12.2010**
(21) Anmeldenummer: 09006338.9
(22) Anmeldetag: 11.05.2009
(51) Int. Cl.: H01T 4/06, H02H 9/06

(54) **Überspannungsschutzgerät**
Excess voltage protection device
Appareil de protection contre les surtensions

(30) Priorität: 29.05.2008 DE 102008025936
(43) Veröffentlichungstag der Anmeldung: 02.12.2009
(73) Patentinhaber: Phoenix Contact GmbH & Co. KG, 32825 Blomberg (DE)
(72) Erfinder: Willmann, Jens, 32257 Bünde (DE); Wolff, Gerhard, 32699 Extertal (DE); Wetter, Martin, 32760 Detmold (DE); Welzel, Frank, 32758 Detmold (DE)
(74) Vertreter: Gesthuysen, von Rohr & Eggert

(56) Entgegenhaltungen:
- DE-A1- 4 005 942

## Beschreibung

Die Erfindung betriff ein Überspannungsschutzgerät zum Schutz eines elektrischen oder elektronischen Geräts, mit einem Gehäuse, mit Eingangs- und Ausgangsanschlüssen für elektrische Leiter, mit Leitungsfaden, die jeweils einen Eingangsanschluss mit einem Ausgangsanschluss verbinden, mit ersten Ableitern, die dem symmetrischen Schutz zwischen den aktiven Leitern dienen und mit zweiten Ableitern, die dem asymmetrischen Schutz zwischen den einzelnen Leitern und dem Erdpotential dienen, wobei die einzelnen ersten Ableiter jeweils mit ihrem ersten Anschluss mit einem Leitungspfad und mit ihrem zweiten Anschluss mit einen gemeinsame Verbindungspunkt verbunden sind, so dass sie auf einem gemeinsamen Bezugspotential liegen und der symmetrische Schutz zwischen zwei Leitern durch zwei in Reihe zueinander angeordnete erste Ableiter realisiert ist. Daneben betrifft die Erfindung noch eine Überspannungsschutzanordnung bestehend aus mindestens zwei Überspannungsschutzgeräten.

Schnittstellen im Bereit der Mess-, Steuer- und Regeltechnik sind gegen Überspannungen weitaus empfindlicher als Stromversorgungssysteme. Die Empfindlichkeit hat dabei in dem Maße zugenommen, in dem auch der Einsatz von elektronischen Bauelementen, insbesondere Transistoren und Thyristoren in elektrischen Geräten, Anlagen und Systemen zugenommen hat. Vor allem sind die zunehmend in elektrischen und elektronischen Geräten eingesetzten integrierten Schaltkreise in starkem Maße durch transiente Überspannungen gefährdet.

Elektrische Stromkreise und elektrische Geräte arbeiten mit der für sie spezifizierten Spannung, der Nennspannung, normalerweise störungsfrei. Dies gilt dann nicht, wenn Überspannungen auftreten. Als Überspannungen gelten alle Spannungen, die oberhalb der oberen Toleranzgrenze der Nennspannung liegen. Hierzu zählen vor allem transiente Überspannungen, die aufgrund von atmosphärischen Entladungen, aber auch durch Schalthandlungen oder Kurzschlüsse in Energieversorgungsnetzen auftreten können und galvanisch, induktiv oder kapazitiv in elektronische Stromkreise eingekoppelt werden können. Um elektrische und elektronische Geräte, insbesondere in der Mess-, Steuer- und Regeltechnik, gegen transiente Überspannungen zu schützen, sind Überspannungsschutzgeräte entwickelt worden, die Überspannungsspitzen abfangen bzw. begrenzen. Diese werden in der Regel unmittelbar vor den zu schützenden Signaleingängen installiert, um die Gefahr einer Überspannungseinkopplung auf dem Leitungsweg zwischen dem Überspannungsschutzgerät und den Signaleingängen der Geräte zu vermeiden.

Bei elektrischen bzw. elektronischen Geräten ist in der Regel die Spannungsfestigkeit der einzelnen Leitungen gegenüber Erde deutlich höher als zwischen den einzelnen aktiven Leitungen. Da darüber hinaus die vom Erdpotential ausgehenden Störgrößen meist energiereicher als eingekoppelte Störgrößen zwischen den Leitungen sind, weisen Überspannungsschutzgerätte zum Schutz von elektrischen oder elektronischen Geräten häufig zwei unterschiedliche Arten von Ableiten auf. Die ersten Ableiter dienen dem symmetrischen Schutz zwischen den aktiven Leitern und die zweiten Ableiter dem asymmetrischen Schutz zwischen den einzelnen Leitern und dem Erdpotential. Als Ableiter für den symmetrischen Schutz werden dabei in der Regel Feinschutzelemente, insbesondere Subressordioden verwendet, die sich durch kurze Ansprechzeiten im ps-Bertich und durch niedrige Begrenzungsspannungen auszeichnen. Als Ableiter für den asymmetrischen Schutz werden dagegen häufig gasgefüllte Überspannungsableiter verwendet, die eine hohe Ableitfähigkeit aufweisen.

Derartige Überspannungsschutzgeräte für den Bereich der Mess-, Steuer- und Regeltechnik werden seit vielen Jahren von der Anmelderin unter dem Produktnamen "PLUGTRAB" vertrieben (vgl. Phoenix Contact Prospekt "Überspannungsschutz TRABTECH 2007", Seiten 60ff). Die bekannten Überspannungsschutzgeräte sind insbesondere als 2-kanalige oder 4-kanalige Geräte ausgebildet, an denen zwei oder vier Signalleiter angeschlossen werden können, so dass mit ihnen der symmetrische Schutz nur zwischen maximal vier Signalleitern gewährleistet werden kann.

Ein Überspannungsschutzgerät, gemäß Oberbegriff des Anspruchs 1 ist aus DE-A-4005942 bekannt.

Der vorliegenden Erfindung liegt die Aufgabe zugrunde, ein eingangs beschriebenes Überspannungsschutzgerät derart weiterzuentwickeln, dass es auch in Signalkreisen mit mehr als vier Signalleitern eingesetzt werden kann und dabei den sicheren Schutz eines angeschlossenen elektrischen oder elektronischen Geräts gegen Überspannungen, insbesondere den symmetrischen Schutz zwischen den Leiter, gewährleistet.

Diese Aufgabe ist bei dem eingangs beschriebenen Überspannungsschutzgerät dadurch gelöst, dass der gemeinsame Verbindungspunkt der zweiten Anschlüsse der ersten Ableiter keine Verbindung zur Erde aufweist und mit einem Auschlusselement verbunden ist, das von außerhalb des Gehäuses zugänglich ist, so dass das Anschlusselement eines Überspannungsschutzgeräts mit dem Anschlusselement mindestens eines weiteren Überspannungsschutzgeräts verbindbar ist. Dadurch, dass erfindungsgemäß der gemeinsame Verbindungspunkt der zweiten Anschlüsse der ersten Ableiter, die dem symmetrischen Schutz zwischen den aktiven Leitern dienen, aus dem Überspannungsschutzgerät herausgeführt ist, besteht die Möglichkeit, den gemeinsamen Verbindungspunkt über das Anschlusselement mit einem entsprechenden gemeinsamen Verbindungspunkt eines oder mehrerer weitetet Überspannungsschutzgeräte elektrisch zu verbinden, wodurch die Möglichkeit besteht, den symmetrischen Schutz zwischen beliebig vielen Signalleiter zu gewährleisten.

Vorteilhafterweise dienen die ersten Ableitet, bei denen es sich insbesondere um Supressordioden handeln kann, ausschließlich dem symmetrischen Schutz zwischen den aktiven Leitern. Ebenso dienen vorteilhafterweise die zweiten Ableiter, bei denen es sich insbesondere um gasgefüllte Überspannungsableiter handeln kann, ausschließlich dem asymmetrischen Schutz zwischen den einzelnen Leitern und dem Erdpotential. Durch die Trennung von symmetrischem Feinschutz zwischen den aktiven Leitern und asymmetrischem Grobschutz zwischen den einzelnen Leitern und dem Erdpotential kann auf die Verwendung von Längsimpedanzen in den einzelnen Leitungspfaden verzichtet werden.

Gemäß einer bevorzugten Ausgestaltung des erfindungsgemäßen Überspannungsschutzgeräts weist das mit dem gemeinsamen Verbindungspunkt verbundene Anschlusselement einen Steckkontakt, insbesondere einen Stift- oder Messerkontakt auf, der in eine korrespondierende Kontaktaufnahme, insbesondere einen Buchsenkontakt, einsteckbar ist. Dadurch, dass das Anschlusselement einen Steckkontakt aufweist, kann die Verbindung mit dem Anschlusselement und damit mit dem gemeinsamen Verbindungspunkt eines oder mehrerer anderer Überspannungsschutzgeräte ohne zeitaufwendige Verdrahtung besonders einfach und schnell realisiert werden.

Besonders einfach kann die Verbindung zwischen den Anschlusselementen einzelner Überspannungsschutzgeräte, die jeweils auf eine Tragschiene aufrastbar sind, dadurch realisiert werden, dass in der Tragschiene ein Bus angeordnet ist, wobei der Bus den einzelnen Überspannungsschutzgeräten zugeordnete Kupplungsteile aufweist, die jeweils einen Buchsenkontakt zur Aufnahme des Steckkontakts der Anschlusselemente aufweisen. Der Bus kann dabei aus einer Mehrzahl von miteinander zusammensteckbaren Kupplungsteilen bestehen, so dass auch der Bus modular aufgebaut ist. Bezüglich der konkreten Ausgestaltung eines derartigen Busses bzw. der Kupplungsteile wird auf die DE 20 2006 006 659 U1 verwiesen.

Gemäß einer alternativen Ausgestaltung des erfindungsgenaäßen Überspannungsschutzgeräts weist das Anschlusselement zwei in Tragschienenlängsrichtung weisende, miteinander verbundene Kontakte auf, wobei der eine Kontakt als Messerkontakt ausgebildet ist und auf der einen Seite des Gehäuse übersteht und der andere Kontakt als korrespondierende Kontaktaufnahme ausgebildet ist und auf der anderen Seite des Gehäuses übersteht. Bei einer derartigen Ausgestaltung des Anschlusselements ist eine elektrische Verbindung zwischen dem Anschlusselement eines Überspannungsschutzgeräts und dem Anschlusselement eines zweiten Überspannungsschutzgeräts einfach dadurch möglich, dass die beiden Überspaonungsschutzgeräte benachbart zueinander angeordnet, insbesondere auf einer Tragschiene aufgerastet werden. Beim Aufrasten auf die Tragschiene erfolgt dann automatisch die elektrischen Verbindung zwischen dem Messerkontakt des Anschlusselements des einen Überspannungsschutzgeräts und der korrespondierenden Kontaktaufnahme des Anschlusselements des zweiten Überspannungsschutzgeräts, indem der Messerkontakt in die Kontaktaufnahme eingesteckt wird.

Werden mehrere derartige Überspannungsschutzgeräte benachbart zueinander angeordnet, so sind die einzelnen Anschlusselemente jeweils ein Teil eines selbstaufbauenden Busses, über den die einzelnen Anschlusselemente und damit auch die jeweiligen gemeinsamen Verbindungspunkte der zweiten Anschlüsse der ersten Ableiter der einzelnen Überspannungsschutzgeräte elektrisch leitend miteinander verbunden werden. Auch durch eine derartige Ausgestaltung der Anschlusselemente kann somit auf einfache Art und Weise ein symmetrischer Schutz zwischen beliebig vielen aktiven Leitern durch elektrische Verbindung des gemeinsamen Bezugspotentials der einzelnen ersten Ableiter der einzelnen Überspannungsschutzgeräte realisiert werden.

Neben einem einzelnen Überspannungsschutzgerät betrifft die Erfindung auch eine Überspannungsschutzanordnung bestehend aus mindestens zwei erfindungsgemäßen Überspannungsschutzgeräten. Mit einer derartigen Überspannungsschutzanordnung ist ein symmetrischer Schutz zwischen einer Mehrzahl von Signalleitern dadurch einfach realisierbar, dass das Anschlusselement eines Überspannungsschutzgeräts, das mit dem gemeinsamen Verbindungspunkt der zweiten Anschlüsse der ersten Ableiter dieses Überspannungsschutzgeräts verbunden ist, mit dem Anschlusselement eines anderen Überspannungsschutzgeräts verbunden ist, wobei auch bei diesem Überspannungsschutzgerät das Anschlusselement mit dem gemeinsamen Verbindungspunkt der zweiten Anschlüsse der ersten Ableiter verbunden ist. Mit einer Überspannungsschutzauordnung, die beispielsweise aus drei 4-kanaligen Überspannungsschutzgeräten besteht, kann somit auf einfache Art und Weise der symmetrische Schutz zwischen insgesamt zwölf aktiven Leitern gewährleistet werden.

Neben der Möglichkeit, den symmetrischen Schutz einer entsprechende Anzahl von Leitern untereinander sicherzustellen, weist die erfindungsgemäße Überspannungsschutzanordnung darüber hinaus den Vorteil auf, dass durch das Hinzufügen von weiteren Überspannungsschutzgeräten die Überspannungsschutzanordnung problemlos an unterschiedliche Anforderungen angepasst werden kann; die Überspannungsschutzanordnung ist somit durch ihren modularen Aufbau beliebig erweiterbar. Durch die Verwendung einer Überspannungsschutzanordnung mit einer entsprechenden Anzahl von Überspannungsschutzgeräten kann somit ein elektronisches Gerät, beispielsweise eine Steuerung, mit einer beliebigen Anzahl von Leitern einfach und zuverlässig gegen Überspannungen geschützt werden.

Gemäß einer bevorzugten Ausgestaltung erfolgt auch bei der erfindungsgemäßen Überspannungsschutzanordnung die elektrische Verbindung der einzelnen Anschlusselemente der einzelnen Überspannungsschutzgeräte, die auf einer Tragschiene aufgerastet werden, über einen in einer Tragschiene angeordneten Bus. Dazu sind in der Tragschiene mehrere Kupplungsteile angeordnet, die im zusammengesetzten Zustand einen gemeinsamen Bus bilden, wobei die einzelnen Kupplungsteile jeweils einen senkrecht zur Tragschienenlängsrichtung verlaufenden Buchsenkontakt aufweisen und die Anschlusselemente der Überspannungsschutzgeräte jeweils einen Steckkontakt, insbesondere einen Stift- oder Messerkontakt aufweisen, der in den korrespondierenden Buchsenkontakt einsteckbar ist

Im einzelnen gibt es nun eine Vielzahl von Möglichkeiten, das erfindungsgemäße Überspannungsschutzgerät bzw. die Überspannungsschutzanordnung auszugestalten und weiterzubilden. Hierzu wird verwiesen auf die den Patentansprüchen 1 und 8 nachgeordneten Patentansprüche sowie auf die nachfolgende Beschreibung bevorzugter Ausnihrungsbcispiele in Verbindung mit der Zeichnung. In der Zeichnung zeigen
- Fig. 1: ein vereinfachtes Schaltbild einer ersten Ausführung eines erfin- dungsgemäßen Überspamungsschunälzgeräts,
- Fig. 2: ein vereinfachtes Schaltbild einer zweiten Ausführung eines er- findungsgemäßen Überspannungsschutzgeräts,
- Fig. 3: ein vereinfachtes Schaltbild einer Überspannungsschutzanord- nung bestehend aus drei Überspannungsschutzgeräten,
- Fig. 4: eine Ausführungsform mehrerer Überspannungsschutzgeräte, teilweise aufgerastet auf einer Tragschiene, und
- Fig. 5: ein Teil eines Überspannungsschutzgeräts gemäß Fig. 4 und eine Tragschiene mit einem Kupplungsteil.

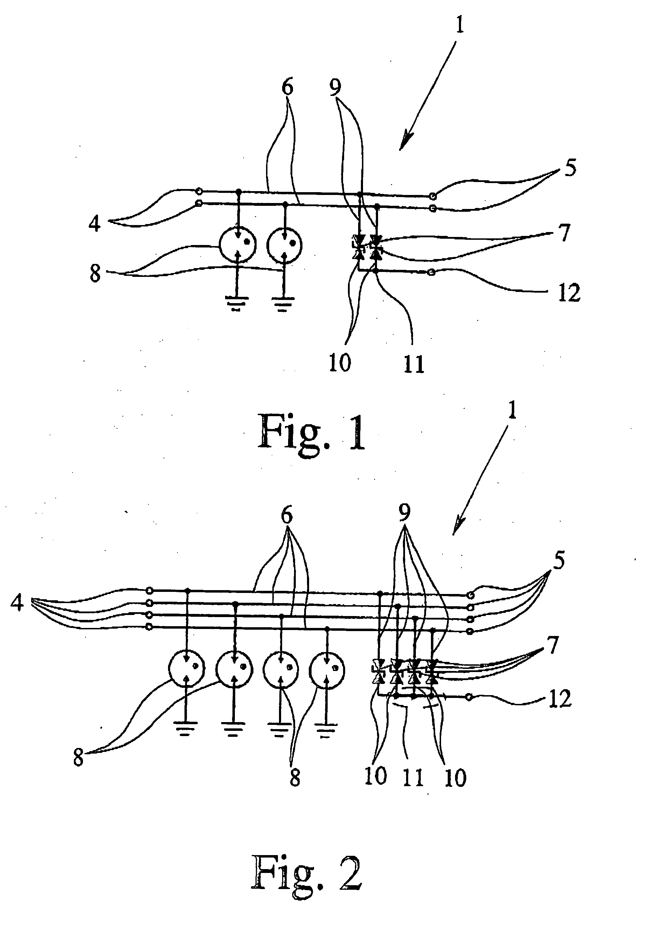

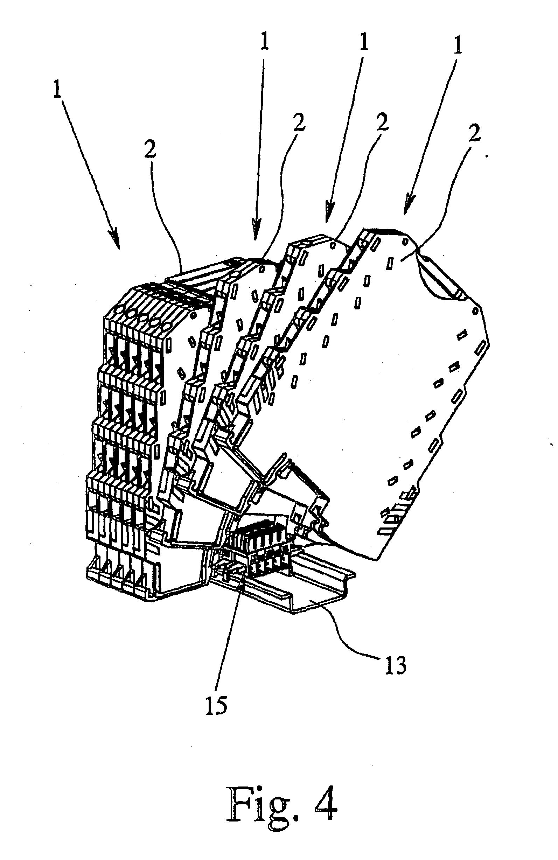

Die Fig. 1 und 2 zeigen den schaltungstechnischen Aufbau eines Überspannungsschutzgeräts 1, von denen mehrere in Fig. 4 dargestellt sind. Das Überspannungsschutzgerät 1 weist ein Gehäuse 2 auf, welches in der Regel aus zwei Gebäusehälften besteht, die eine im Inneren des Gehäuses 2 angeordnete Leiterplatte 3 mit den darauf angeordneten elektronischen Bauteilen aufnimmt. Das Überspannungsschutzgerät 1 weist an seinen beiden Stirnseiten Eingangsanschlüsse 4 und Ausgangsanschlüsse 5 auf, die vorzugsweise als Schraubklemmen oder als Zugfederklemmen ausgebildet sind und in mehreren Reihen versetzt übereinander oder nebeneinander angeordnet sein können. An die Eingangsanschlüsse 4 werden dabei in der Regel die Versorgungsleitungen eines Mess-, Steuer- oder Regelkreises angeschlossen, während an die Ausgangsanschlüsse 5 das zu schützende elektronische Gerät angeschlossen wird.

Wie aus den Fig. 1 und 2 ersichtlich ist, ist jeweils ein Eingangsanschluss 4 mit jeweils einem Ausgangsanschluss 5 über einen Leitungspfad 6 elektrisch verbunden, wobei in Fig. 1 das Schaltbild eines 2-kanaligen Überspannungsschutzgeräts 1 und in Fig. 2 das Schaltbild eines 4-kanaligen Überspannungsschutzgeräts 1 dargestellt ist Den beiden in den Fig. 1 und 2 dargestellten Ausführungsbeispielen eines Überspannungsschutzgeräts 1 ist gemeinsam, dass der symmetrische Schutz zwischen den aktiven Leitern durch die Anordnung von Supressordioden als erste Ableiter 7 gewährleistet ist. Darüber hinaus weisen die Überspannungsschutzgeräte 1 eine der Anzahl der anzuschließenden Leiter entsprechende Anzahl an gasgefüllten Überspannungsableitern als zweite Ableiter 8 auf, die dem asymmetrischen Schutz zwischen den einzelnen Leitern und dem Erdpotential dienen. Wie aus den Fig. 1 und 2 ersichtlich ist, sind die einzelnen Supressordioden 7 mit ihrem ersten Anschluss 9 mit jeweils einem Leitungspfad 6 und mit ihrem zweiten Anschluss 10 mit einem gemeinsamen Verbindungspunkt 11 verbunden, so dass die zweiten Anschlüsse 10 der Supressordioden 7 auf einem gemeinsamen Bezugspotential liegen. Der symmetrische Schutz zwischen zwei Leitern erfolgt dabei über zwei Supressordioden 7, deren Verbindungspunkt der gemeinsamen Verbindungspunkt 11 ist.

Allein mit dem in Fig. 1 dargestellten Überspannungsschutzgerät 1 ist somit ein symmetrischer Schutz nur zwischen zwei Leitern und allein mit dem in Fig. 2 dargestellten Überspannungsschutzgerät 1 nur zwischen vier Leitern möglich. Dadurch, dass die erfindungsgemäßen Überspannungsschutzgeräte 1 neben den Eingangsanschlüssen 4 und den Ausgangsanschlüssen 5 noch ein weiteres Anschlusselement 12 aufweisen, das mit dem gemeinsamen Verbindungspunkt 11 verbunden und von außerhalb des Gehäuses 2 zugänglich ist, kann das Anschlusselement 12 eines Überspannungsschutzgeräts 1 mit dem Anschlusselement 12 eines weiteren Überspannungsschutzgeräts 1 bzw. den Anschlusselementen 12 weitere Überspannungsschutzgeräte 1 verbunden werden, so dass die Möglichkeit besteht, den symmetrischen Schutz zwischen einer beliebigen Anzahl von Leitern zu gewährleisten.

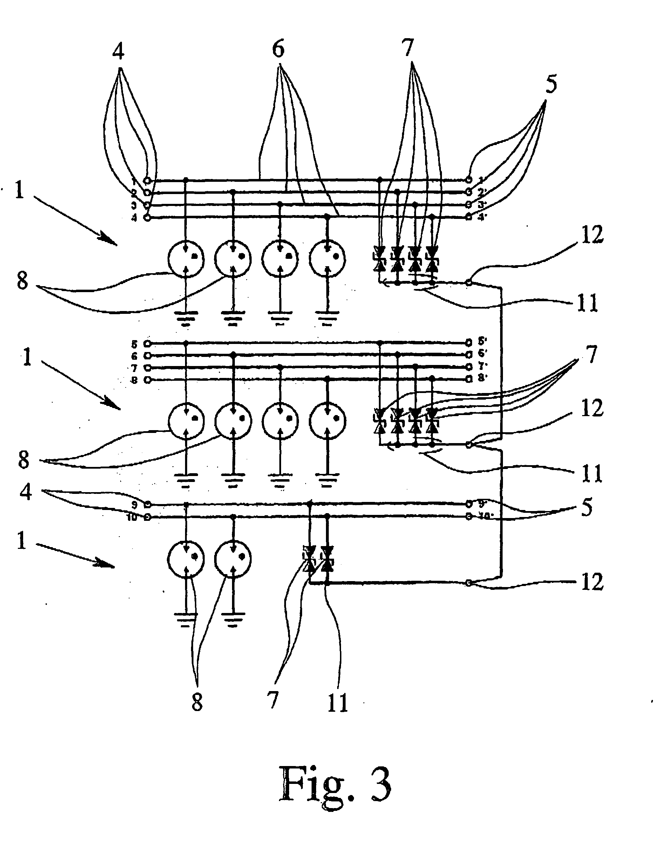

In Fig. 3 ist das prinzipielle Schaltbild einer Überspannungsschutzanordnung dargestellt, die aus drei Überspannungsschutzgeräten 1 besteht, von denen zwei als 4-kanalige Überspannungsschutzgeräte 1 und eines als 2-kanaliges Überspannungsschutzgerät 1 ausgebildet sind. Mit dieser Überspannungsschutzanordnung ist somit auf einfache Art und Weise der symmetrische Schutz zwischen zehn Leitern realisierbar, wozu lediglich die Anschlusselemente 12 der drei Überspannungsschutzgeräte 1 miteinander verbunden werden müssen.

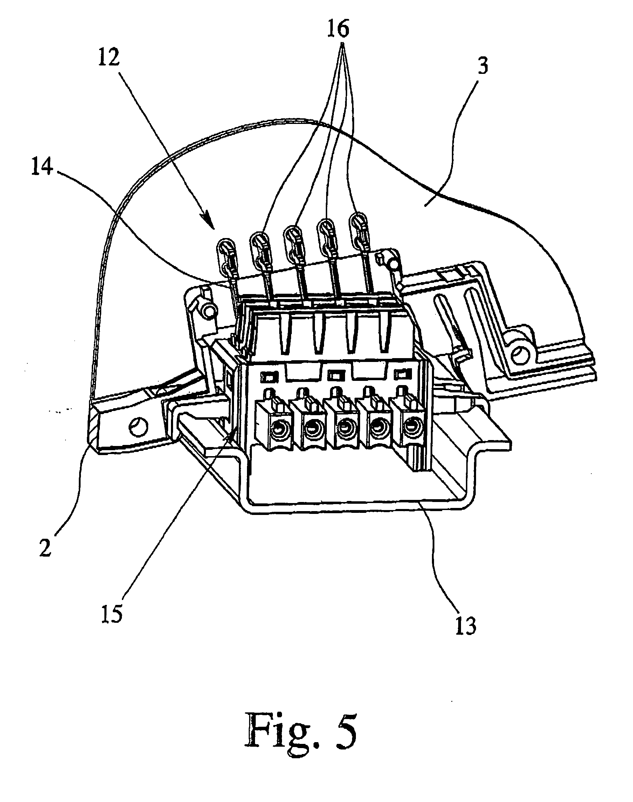

Fig. 4 zeigt mehrere Überspannungsschutzgeräte 1, von denen einige bereits auf einer Tragschiene 13 aufgerastet sind, während andere Überspannungsschutzgeräte 1 noch nicht auf die Tragschiene 13 aufgerastet bzw. aufgeschwenkt sind. Eine vergrößerte Darstellung eines Teils eines derartigen Überspannungsschutzgerats zeigt Fig. 5, wobei hier lediglich der Sockelbereich des Gehäuses 2 und ein Teil der in dem Gehäuse 2 angeordneten Leiterplatte 3 dargestellt sind.

Zur einfachen, insbesondere Drahtlosen elektrischen Kontaktierung weist das Anschlusselement 12 einen Steckkontakt 14 auf, der in einem korrespondierenden Buchsenkontakt eines in der Tragschiene 13 eingerasteten Kupplungsteils 15 einsteckbar ist. Das Anschlusselement 12 ist dabei über auf der Leiterplatte 3 ausgebildete - hier nicht dargestellte - Leiterbahnen mit dem gemeinsamen Verbindungspunkt 11 der zweiten Anschlüsse 10 der Supressordioden 7 verbunden.

Außer dem Anschlusselement 12 sind in der Leiterplatte 3 noch vier weitere Kontaktelemente 16 eingesteckt und ebenfalls mit Leiterbahnen elektrisch verbunden, die beim Aufrasten des Überspannungsschutzgeräts 1 auf die Tragschiene 13 ebenfalls mit korrespondierenden Buchsenkontakten in dem Kupplungsteil 15 kontaktieren. Das in der Tragschiene 13 eingerastete Kupplungsteil 15 ist so ausgebildet, dass es nicht nur zur elektrischen Kontakderung des Anschlusselements 12 bzw. der Kontaktelemente 16 dient, sondern auch derart mit benachbarten, ebenfalls in der Tragschiene 13 eingerasteten Kupplungsteilen 15 zusammensteckbar ist, dass die miteinander verbundenen Kupplungsteile 15 einen gemeinsamen Bus zur Energie- und Datenübertragung bilden.

Bei Anordnung einer entsprechenden Anzahl von Kupplungsteilen 15 in der Tragschiene 13 erfolgt die elektrische Verbindung der Anschlusselemente 12 und damit der gemeinsamen Verbindungspunkte 11 der zweiten Anschlüsse 10 der Supressordioden 7 der einzelnen Überspannungsschutzgeräte 1 einfach dadurch, dass die einzelnen Überspannungsschutzgeräte 1 auf die Tragschiene 13 ausgeschwenkt werden, wobei automatisch die Steckkontakte 14 der Anschlusselemente 12 in die korrespondierenden Buchsenkontakte in den Kupplungsteilen 15 eingesteckt werden.

Über den durch die einzelnen Kupplungsteile 15 gebildeten Bus kann darüber hinaus eine Sammelfernmeldung für alle auf die Kupplungsteile 15 aufgesteckten Überspannungsschutzgeräte 1 erfolgen. Außerdem besteht die Möglichkeit, dass den einzelnen Überspähnungssehutzgeräten 1 über den Bus evtl. notwendige Hilfsenergie für eine in den einzelnen Überspannungsschutzgeräten 1 realisierte Statusüberwachung zur Verfügung gestellt wird

## Patentansprüche

1. Überspannungsschutzgerät zum Schutz eines elektrischen oder elektronischen Geräts, mit einem Gehäuse (2), mit Eingangs- und Ausgangsaaschlüssen (4, 5) für elektrische Leiter, mit Leitungspfaden (6), die jeweils einen Eingangsanschluss (4) mit einem Ausgangsanschluss (5) verbinden, mit ersten Ableitern (7), die dem symmetrischen Schutz zwischen den aktiven Leitern dienen und mit zweiten Ableitern (8), die dem asymmetrischen Schutz zwischen den einzelnen Leitern und dem Erdpotential dienen,
wobei die einzelnen ersten Ableiter (7) jeweils mit ihrem ersten Anschluss (9) mit einem Leitungspfad (6) verbunden sind und mit ihrem zweiten Anschluss (10) mit einen gemeinsame Verbindungspunkt (11) verbunden sind, so dass sie auf einem gemeinsamen Bezugspotential liegen und der symmetrische Schutz zwischen zwei Leitern durch zwei in Reihe zueinander angeordnete erste Ableiter (7) realisiert ist,
**dadurch gekennzeichnet,**
**dass** der gemeinsame Verbindungspunkt (11) der zweiten Anschlüsse (10) der ersten Ableiter (7) keine Verbindung zur Erde aufweist und mit einem Anschlusselement (12) verbunden ist, das von außerhalb des Gehäuses (2) zugänglich ist, so dass das Anschlusselement (12) eines Überspannungsschutzgeräts (1) mit dem Anschlusselement (12) eines anderen Überspannungsschutzgeräts (1) verbindbar ist.

2. Überspannungsschutzgerät nach Anspruch 1, **dadurch gekenntzeichnet, dass** das Gehäuse (2) auf eine Tragschiene (13) aufrastbar ist.

3. Überspannungsschutzgerät nach Anspruch 1 oder 2, **dadurch gekennzeichnet, dass** das Anschlusselement (12) einen Steckkontakt (14), insbesondere einen Stift- oder Messerkontakt aufweist, der in eine korrespondierende Kontaktaufnahme, insbesondere einen Buchsenkontakt, einsteckbar ist.

4. Überspannungsschutzgerät nach Anspruch 2 und 3, **dadurch gekennzeichnet, dass** der Steckkontakt (14) in einen Buchsenkontakt eines in der Tragschiene (13) angeordneten Kupplungsteils (15) eines Buses oder eines Teils eines Buses einsteckbar ist.

5. Überspannungsschutzgerät nach Anspruch 1 oder 2, **dadurch gekennzeichnet, dass** das Anschlusselement (12) zwei in Tragschienenlängsrichtung weisende, miteinander verbundene Kontakte aufweist, wobei der eine Kontakt als Messerkontakt ausgebildet ist und auf der einen Seite des Gehäuses (2) übersteht und der andere Kontakt als korrespondierende Kontaktaufnahme ausgebildet ist und auf der anderen Seite des Gehäuses (2) übersteht.

6. Überspannungsschutzgerät nach einem der Ansprüche 1 bis 5, **dadurch gekennzeichnet, dass** die ersten Ableiter (7) als Feinschutzelement mit einer kurzen Ansprechzeit und relativ niedriger Begrenzungsspannung, insbesondere als Supressor-Dioden ausgebildet sind.

7. Überspannungssehutzgerät nach einem der Ansprüche 1 bis 6, **dadurch gekennzeichnet, dass** die zweiten Ableiter (8) als Schutzelement mit hohem Ableitvermögen, insbesondere als gasgefüllte Überspannungsableiter ausgebildet sind.

8. Überspannungsschutzgerät nach Anspruch 6 und 7, **dadurch gekennzeichnet, dass** die ersten Ableiter (7) ausschließlich dem symmetrischen Schutz zwischen den aktiven Leitern und die zweiten Ableiter (8) ausschließlich dem asymmetrischen Schutz zwischen den einzelnen Leitern und dem Erdpotential dienen.

9. Überspannungsschutzanordnung bestehend aus mindestens zwei Überspannungsschutzgeräten (1) nach einem der Ansprüche 1 bis 8, **dadurch gekennzeichnet, dass** das Anschlusselement (12) eines Überspannungsschutzgeräts (1) mit dem Anschlusselement (12) eines anderen Überspannungsschutzgeräts (1) verbunden ist.

10. Überspannungsschutzanordnung nach Anspruch 9 zum Aufrasten auf eine Tragschiene (13), **dadurch gekennzeichnet, dass** in der Tragschiene (13) mehrere Kupplungsteile (15) angeordnet sind, die im zusammengesetzten Zustand einen gemeinsamen Bus bilden, dass die Kupplungsteile (15) jeweils einen senkrecht zur Tragschienenlängtrichtung verlaufenden Buchsenkontakt aufweisen und dass die Anschlusselemente (12) der Überspannungsschutzgeräte (1) jeweils einen Steckkontakt (14), insbesondere einen Stift- oder Messerkontakt, aufweisen, so dass die einzelnen Steckkontakte (14) in die Buchsenkontakte einsteckbar sind.

## Claims

1. Overvoltage protection device for protection of an electrical or electronic device, comprising a housing (2), input and output terminals (4, 5) for electrical conductors, line paths (6) which each connect an input terminal element (4) to an output terminal element (5), first arresters (7) for symmetrical protection between the active conductors and second arresters (8) for asymmetrical protection between the individual conductors and the ground potential,
wherein each first arrester (7) is connected by his first terminal (9) to a line paths (6) and by his second terminal (10) to a common connecting point (11) so that they are at a common reference potential and the symmetrical protection between two conductors is implemented by two first arresters (7) being located in series with one another,
**characterized in**
**that** the common connecting point (11) of the second terminals (10) of the first arresters (7) has no connection to ground and is connected to a terminal element (12) which is accessible from outside the housing (2) so that the terminal element (12) of one overvoltage protection device (1) can be connected to the terminal element (12) of another overvoltage protection device (1).

2. Overvoltage protection device according to claim 1, **characterized in that** the housing (2) is lockable onto a mounting rail (13).

3. Overvoltage protection device according to claim 1 or 2, **characterized in that** the terminal element (12) has a plug-in contact (14), in particular a pin or blade contact, which can be plugged into a corresponding contact receiver, in particular a jack.

4. Overvoltage protection device according to claim 2 or 3, **characterized in that** the plug-in contact (14) can be plugged into a jack of a coupling part (15) of a bus or part of a bus, which coupling part is located in the mounting rail (13).

5. Overvoltage protection device according to claim 1 or 2, **characterized in that** the terminal element (12) has two contacts which are connected to one another and which point in a lengthwise direction of the mounting rail, wherein the one contact being a blade contact and projecting on one side of the housing (2) and the other contact being a corresponding contact receiver and projecting on the opposite side of the housing (2).

6. Overvoltage protection device according to any one of claims 1 to 5, **characterized in that** the first arresters (7) are designed as fine protection elements with a short response time and a relatively low limiting voltage, in particular as suppressor diodes.

7. Overvoltage protection device according to any one of claims 1 to 6, **characterized in that** the second arresters (8) are designed as protective elements with high discharge capacity, in particular as gas-filled overvoltage arresters.

8. Overvoltage protection device according to claims 6 and 7, **characterized in that** the first arresters (7) solely provide symmetrical protection between the active conductors and that the second arresters (8) solely provide asymmetrical protection between the individual conductors and the ground potential.

9. Overvoltage protection arrangement comprising at least two overvoltage protection devices according to any one of claims 1 to 8, **characterized in that** the terminal element (12) of one overvoltage protection devices (1) is connected to the terminal element (12) of another overvoltage protection device (1).

10. Overvoltage protection arrangement according to claim 9 to be locked onto a mounting rail (13), **characterized in that** a plurality of coupling parts (15) are provided in the mounting rail (13) and which, in the assembled state, form a common bus, wherein each of the coupling parts (15) has a jack which runs perpendicular to a lengthwise direction of the mounting rail and wherein each of the terminal elements (12) of the overvoltage protection devices (1) has a plug-in contact (14), in particular a pin or blade contact, so that the individual plug-in contacts (14) can be plugged into a respective jack.

## Revendications

1. Appareil de protection contre les surtensions destiné à protéger un appareil électrique ou électronique et doté d'un boîtier (2), de bornes d'entrée et de bornes de sortie (4, 5) pour des conducteurs électriques, de parcours conducteurs (6) qui relient chacun une borne d'entrée (4) à une borne de sortie (5), de premiers conducteurs d'évacuation (7) qui assurent une protection symétrique entre les conducteurs actifs et de deuxièmes conducteurs d'évacuation (8) qui assurent la protection asymétrique entre les différents conducteurs et le potentiel de terre,
les différents premiers conducteurs d'évacuation (7) étant reliés à une première borne (9) respective par un parcours conducteur (6) et par leur deuxième borne (10) à un point de liaison commun (11) de telle sorte qu'ils soient placés à un potentiel de référence commun et que la protection symétrique entre deux conducteurs soit réalisée par deux premiers conducteurs d'évacuation (7) raccordés l'un à l'autre en série,
**caractérisé en ce que**
le point de liaison commun (11) des deuxièmes bornes (10) des premiers conducteurs d'évacuation (7) ne présente pas de liaison à la terre et est relié à un élément de raccordement (12) qui est accessible de l'extérieur du boîtier (2) de telle sorte que l'élément de raccordement (12) d'un appareil (1) de protection contre les surtensions puisse être relié à l'élément de raccordement (12) d'un autre appareil (1) de protection contre les surtensions.

2. Appareil de protection contre les surtensions selon la revendication 1, **caractérisé en ce que** le boîtier (2) peut être encliqueté sur un rail de support (13).

3. Appareil de protection contre les surtensions selon les revendications 1 ou 2, **caractérisé en ce que** l'élément de raccordement (12) présente une fiche de contact (14), en particulier un contact à tige ou à lame, qui peut être enfichée dans un logement correspondant de contact et en particulier dans une douille de contact.

4. Appareil de protection contre les surtensions selon les revendications 2 et 3, **caractérisé en ce que** la fiche de contact (14) peut être enfichée dans une douille de contact d'une partie d'accouplement (15), disposée dans le rail de support (13), d'un bus ou d'une partie d'un bus.

5. Appareil de protection contre les surtensions selon les revendications 1 ou 2, **caractérisé en ce que** l'élément de raccordement (12) présente deux contacts reliés l'un à l'autre et orientés dans le sens de la longueur du rail de support, un des contacts étant configuré comme contact à lame et débordant d'un côté du boîtier (2) et l'autre contact étant configuré comme logement de contact correspondant et débordant de l'autre côté du boîtier (2).

6. Appareil de protection contre les surtensions selon l'une des revendications 1 à 5, **caractérisé en ce que** le premier conducteur d'évacuation (7) est configuré comme élément de protection fine dont le temps de réponse est court et la tension limite relativement basse, et en particulier comme diode d'abaissement de tension.

7. Appareil de protection contre les surtensions selon l'une des revendications 1 à 6, **caractérisé en ce que** les deuxièmes conducteurs d'évacuation (8) sont configurés comme éléments de protection à haute capacité d'évacuation et en particulier comme conducteurs d'évacuation des surtensions remplis de gaz.

8. Appareil de protection contre les surtensions selon les revendications 6 et 7, **caractérisé en ce que** les premiers conducteurs d'évacuation (7) servent uniquement à la protection symétrique entre les conducteurs actifs et les deuxièmes conducteurs d'évacuation (8) servent uniquement à la protection asymétrique entre les différents conducteurs et le potentiel de terre.

9. Système de protection contre les surtensions constitué d'au moins deux appareils (1) de protection contre les surtensions selon l'une des revendications 1 à 8, **caractérisé en ce que** l'élément de raccordement (12) d'un appareil (1) de protection contre les surtensions est relié à l'élément de raccordement (12) d'un autre appareil (1) de protection contre les surtensions.

10. Système de protection contre les surtensions selon la revendication 9, destiné à être encliqueté sur un rail de support (13), **caractérisé en ce que** plusieurs pièces d'accouplement (15) qui forment un bus commun lorsqu'elles sont assemblées sont disposées dans le rail de support (13), **en ce que** les pièces d'accouplement (15) présentent toutes une douille de contact qui s'étend perpendiculairement au sens de la longueur du rail de support et **en ce que** les éléments de raccordement (12) des appareils (1) de protection contre les surtensions présentent tous une fiche de contact (14), en particulier un contact à tige ou à lame, de sorte que les différentes fiches de contact (14) puissent être enfichées dans les douilles de contact.
